# EUROPÄISCHE PATENTSCHRIFT

(11) **EP 3 744 665 B1**
(45) Veröffentlichungstag und Bekanntmachung des Hinweises auf die Patenterteilung: **26.07.2023**
(21) Anmeldenummer: 20176759.7
(22) Anmeldetag: 27.05.2020
(51) Int. Cl.: B65G 43/00, F21K 2/00, G08B 5/36

(54) **VERFAHREN ZUR ÜBERWACHUNG UND/ODER INSTANDHALTUNG EINER FÖRDERANLAGE UND FÖRDERANLAGE**
CONVEYOR SYSTEM AND METHOD FOR MONITORING AND / OR MAINTAINING A CONVEYOR SYSTEM
PROCÉDÉ DE SURVEILLANCE ET/OU DE MAINTENANCE D'UNE INSTALLATION DE TRANSPORT ET INSTALLATION DE TRANSPORT

(30) Priorität: 29.05.2019 DE 102019114469
(43) Veröffentlichungstag der Anmeldung: 02.12.2020
(73) Patentinhaber: Deutsche Post AG, 53113 Bonn (DE)
(72) Erfinder: HARTMANN, Bernd, 53501 Grafschaft-Leimersdorf (DE); KRUP, Manfred, 31185 Söhlde (DE); KRAEMER, Arnd, 31141 Hildesheim (DE)
(74) Vertreter: Cohausz & Florack

(56) Entgegenhaltungen:
- DE-A1-102008 020 520
- DE-A1-102015 005 443
- DE-U1-202018 100 245
- JP-A- 2007 320 722
- JP-A- 2014 091 609

## Beschreibung

Die Erfindung betrifft ein Verfahren zur Überwachung und/oder Instandhaltung einer vereinzelte Stückgüter, insbesondere Packstücke, transportierenden Förderanlage, wobei die Förderanlage eine sich wenigstens abschnittsweise entlang eines Transportpfads für die Stückgüter erstreckende Anzeigeeinrichtung aufweist, wobei die Anzeigeeinrichtung dazu ausgebildet ist, wenigstens ein optisches Signal an unterschiedlichen Stellen des wenigstens einen Transportpfads anzuzeigen und wobei die Anzeigeeinrichtung mit einer Steuereinrichtung gekoppelt ist. Ferner betrifft die Erfindung eine Förderanlage zum Transportieren von Stückgütern, insbesondere Packstücken, wobei die Förderanlage eine sich wenigstens abschnittsweise entlang eines Transportpfads für die Stückgüter erstreckende Anzeigeeinrichtung aufweist, wobei die Anzeigeeinrichtung dazu ausgebildet ist, wenigstens ein optisches Signal an unterschiedlichen Stellen des wenigstens einen Transportpfads anzuzeigen und wobei die Anzeigeeinrichtung mit einer Steuereinrichtung gekoppelt ist.

Es sind sehr unterschiedliche Förderanlagen und auch Verfahren zur Überwachung sowie Instandhaltung solcher Förderanlagen bekannt. Unter den Förderanlagen werden vorliegend nicht solche zum Transportieren von Schüttgütern, sondern von Stückgütern verstanden. Derartige Förderanlagen weisen beispielsweise regelmäßig Bandförderer, Gurtförderer oder Rollenförderer auf. Die Förderanlagen können dabei bedarfsweise lediglich zum Transportieren der Stückgüter von einem Ort zu einem anderen Ort dienen. Dann ist es ausreichend, wenn die Förderanlage lediglich einen Transportpfad aufweist, entlang dem die Stückgüter nacheinander und vereinzelt gefördert werden. Es kann aber auch vorgesehen sein, dass die Förderanlage unterschiedliche Stückgüter von einem gemeinsamen Ausgangspunkt zu unterschiedlichen Endpunkten transportiert. Zudem sind Förderanlagen bekannt, bei denen Stückgüter von unterschiedlichen Ausgangspunkten jeweils zu unterschiedlichen Endpunkten transportiert werden können. Derartige Förderanlagen weisen wenigstens zwei unterschiedliche Transportpfade auf und sind bedarfsweise zum Sortieren von Stückgütern ausgebildet. Insbesondere Fördereinrichtungen mit mehreren Transportpfaden können eine nicht unerhebliche Komplexität aufweisen. Dabei können die Verfahren zum Fördern der Stückgüter entlang der unterschiedlichen Transportpfade entsprechend komplex ausgestaltet sein. Dies ist insbesondere für Förderanlagen der Fall, entlang derer die Stückgüter jeweils vereinzelt, also voneinander in der Transportrichtung beabstandet und hintereinander transportiert werden.

Zudem sind Förderanlagen mit Anzeigeeinrichtungen bekannt, welche sich wenigstens abschnittsweise entlang wenigstens eines Transportpfads der Förderanlage erstrecken. Die Anzeigeeinrichtungen sind mit einer Steuereinrichtung gekoppelt und auf diese Weise dazu ausgebildet, Informationen betreffend den Transport von Stückgütern anzuzeigen. Es kann beispielsweise durch ein grünes Licht angezeigt werden, dass der Transport der Stückgüter in dem dem Licht zugeordneten Abschnitt des Transportpfads erfolgt. Ein rotes Licht kann dagegen beispielsweise signalisieren, dass in dem dem Licht zugeordneten Abschnitt des Transportpfads ein Stau aufgetreten ist oder die Förderung von Stückgütern zum Erliegen gekommen ist. Die einzelnen Anzeigen können auch an einzelne Stückgüter gekoppelt sein, so dass parallel zum Transport eines Stückguts ein Signal der Anzeigeeinrichtung entlang der Anzeigeeinrichtung und damit entlang des Transportpfads angezeigt wird. Mithin kann der tatsächliche Transport des entsprechenden Stückguts mit den Signalen entlang der Anzeigeeinrichtung bzw. des Transportpfads verglichen werden. Je nach dem entsprechenden Signal oder der Signalform kann dann festgestellt werden, ob ein Eingriff in der Förderanlage zur Behebung einer Störung erforderlich ist oder nicht.

Grundsätzlich wird mit steigender Komplexität der Förderanlagen und der Verfahren zu deren Betrieb eine erhöhte Verfügbarkeit der Förderanlage gefordert, um die Förderanlagen möglichst wirtschaftlich betreiben zu können. Es ist also von Interesse, die ordnungsgemäße Funktion der Förderanlagen zu überwachen, um Betriebsstörungen vorzeitig erkennen und/oder rasch beseitigen zu können. Diesem Interesse kann bislang jedoch nur unzureichend Rechnung getragen werden, so dass es immer wieder zu Betriebsstörungen der Förderanlagen kommt, die zeitaufwendig behoben werden müssen, so dass die Verfügbarkeit der Förderanlagen sinkt.

Die DE 20 2018 100245 U1 offenbart ein Verfahren zur Überwachung und/oder Instandhaltung einer vereinzelte Stückgüter, insbesondere Packstücke, transportierenden Förderanlage, wobei die Förderanlage eine sich wenigstens abschnittsweise entlang eines Transportpfads für die Stückgüter erstreckenden Anzeigeeinrichtung aufweist, wobei die Anzeigeeinrichtung dazu ausgebildet ist, wenigstens ein optisches Signal an unterschiedlichen Stellen des wenigstens einen Transportpfads anzuzeigen und wobei die Anzeigeeinrichtung mit einer Steuereinrichtung gekoppelt ist,- bei dem die Steuereinrichtung Informationen betreffend die wenigstens eines Stückguts entlang des wenigstens einen Transportpfads erhält und/oder ermittelt,- bei dem von der Anzeigeeinrichtung wenigstens abschnittsweise ein sich parallel zu einem sich entlang des wenigstens einen Transportpfads transportierten Stückgut mitlaufendes, optisches Signal angezeigt wird und- bei dem das mit dem wenigstens einen Stückgut mitlaufende, optische Signal als die tatsächliche Förderung wenigstens eines Stückguts entlang des wenigstens einen Transportpfads anzeigt. Darüber hinaus offenbart die DE 20 2018 100245 U1 ein Verfahren, wobei ein Zustand (fehlerhaftes Produkts) angezeigt wird. Diese Druckschrift offenbart jedoch keine Anzeige eines Verhältnis der tatsächlichen Förderung eines Stückguts entlang des Transportpfads zur vorbestimmten Förderung des Stückguts in Abhängigkeit des jeweils tatsächlichen und/oder vorbestimmten Ortes des Stückguts.

Darüber hinaus offenbart die DE 20 2018 100245 U1 eine Förderanlage nach dem Oberbegriff des Anspruchs 13.

Der vorliegenden Erfindung liegt daher die Aufgabe zugrunde, das Verfahren und die Förderanlage jeweils der eingangs genannten und zuvor näher beschriebenen Art derart auszugestalten und weiterzubilden, dass die Verfügbarkeit dadurch gesteigert wird, dass Betriebsstörungen vermieden oder wenigstens schnell behoben werden können.

Diese Aufgabe wird gemäß Anspruch 1 gelöst durch ein Verfahren zur Überwachung und/oder Instandhaltung einer vereinzelte Stückgüter, insbesondere Packstücke, transportierenden Förderanlage, wobei die Förderanlage eine sich wenigstens abschnittsweise entlang eines Transportpfads für die Stückgüter erstreckenden Anzeigeeinrichtung aufweist, wobei die Anzeigeeinrichtung dazu ausgebildet ist, wenigstens ein optisches Signal an unterschiedlichen Stellen des wenigstens einen Transportpfads anzuzeigen und wobei die Anzeigeeinrichtung mit einer Steuereinrichtung gekoppelt ist,
- bei dem die Steuereinrichtung Informationen betreffend das Verhältnis der tatsächliche Förderung wenigstens eines Stückguts entlang des wenigstens einen Transportpfads zur vorbestimmten Förderung des wenigstens einen Stückguts entlang des wenigstens einen Transportpfads erhält und/oder ermittelt,
- bei dem von der Anzeigeeinrichtung wenigstens abschnittsweise ein sich parallel zu einem sich entlang des wenigstens einen Transportpfads transportierten Stückgut mitlaufendes, optisches Signal angezeigt wird und
- bei dem das mit dem wenigstens einen Stückgut mitlaufende, optische Signal das Verhältnis der tatsächlichen Förderung wenigstens eines Stückguts entlang des wenigstens einen Transportpfads zur vorbestimmten Förderung des wenigstens einen Stückguts entlang des wenigstens einen Transportpfads in Abhängigkeit des jeweils tatsächlichen und/oder vorbestimmten Ortes des wenigstens einen Stückguts anzeigt.

Die genannte Aufgabe wird zudem bei einer Förderanlage nach Anspruch 13 dadurch gelöst, dass die Förderanlage für die Durchführung eines Verfahrens zur Überwachung und/oder Instandhaltung, insbesondere gemäß einem der Ansprüche 1 bis 12, ausgebildet ist, dass die Steuereinrichtung zum Erhalten und/oder Ermitteln von Informationen betreffend das Verhältnis der tatsächlichen Förderung wenigstens eines Stückguts entlang des wenigstens einen Transportpfads zur vorbestimmten Förderung des wenigstens einen Stückguts entlang des wenigstens einen Transportpfads ausgebildet ist, dass die Anzeigeeinrichtung zum wenigstens abschnittsweisen Anzeigen eines sich parallel zu einem sich entlang des wenigstens einen Transportpfads transportierten Stückgut mitlaufenden, optischen Signals ausgebildet ist und dass die Steuereinrichtung zur Anzeige des Verhältnisses der tatsächlichen Förderung wenigstens eines Stückguts entlang des wenigstens einen Transportpfads zur vorbestimmten Förderung des wenigstens einen Stückguts entlang des wenigstens einen Transportpfads in Abhängigkeit des jeweils tatsächlichen und/oder vorbestimmten Ortes des wenigstens einen Stückguts über das mit dem wenigstens einen Stückgut mitlaufenden, optischen Signal ausgebildet ist.

Die Erfindung sieht mithin vor, dass die Förderanlage wenigstens einen Transportpfad umfasst, entlang dem die zu fördernden Stückgüter transportiert werden können. Besonders bevorzugt wird es jedoch regelmäßig sein, wenn die Förderanlage mehrere Transportpfade aufweist, die sich weiter bevorzugt verzweigen können. So lassen sich Stückgüter von wenigstens einem Ausgangspunkt zu unterschiedlichen Endpunkten transportieren. Dies erlaubt zudem eine Sortierung der Stückgüter entlang der Förderanlage anhand von vorgegebenen Kriterien. Dies ist beispielsweise bei der Förderung von Stückgütern in Form von Packstücken der Fall, wobei jedoch ganz grundsätzlich Stückgüter in Form von Packstücken, also umverpackten Objekten, bevorzugt sind. Die Stückgüter sind dabei insbesondere durch Packungen in Form von Kartons, Folien oder dergleichen umverpackt, wobei die Packung je nach dem umverpackten Stückgut variieren kann. Weiter bevorzugt kann es sich bei den Packstücken um Pakete oder Paketsendungen handeln.

Wenigstens abschnittsweise entlang wenigstens eines Transportpfads ist eine Anzeigeeinrichtung vorgesehen, die der Einfachheit halber neben dem entsprechenden Transportpfad angeordnet sein kann. Die Anzeigeeinrichtung kann aber wenigstens teilweise auch unter oder über dem entsprechenden Transportpfad angeordnet sein. Unabhängig davon wird sich die Anzeigeeinrichtung insbesondere so erstrecken, dass die Anzeigeeinrichtung erkennbar einem Transportpfad zugeordnet ist und dass unterschiedliche Abschnitte der Anzeigeeinrichtung erkennbar unterschiedlichen Abschnitten des Transportpfads zugeordnet sind. So kann die Anzeigeeinrichtung ein optisches Signal an unterschiedlichen Abschnitten der Anzeigeeinrichtung und unterschiedlichen Abschnitten des wenigstens einen Transportpfads zugeordnet anzeigen. Wenn das optische Signal in rascher Folge in seitlich geringfügig versetzten Stellen der Anzeigeeinrichtung angezeigt werden kann, ergibt sich für den Betrachter den Eindruck, als würde das optische Signal entlang der Anzeigeeinrichtung und damit entlang der Transportbahn wandern. Das Signal kann mithin mit einem Stückgut entlang der wenigstens einen Transportbahn, wenigstens abschnittsweise, wandern. Dabei ist es ebenso denkbar, dass das optische Signal eine gleichbleibende Signalform aufweist oder die Signalform verändert.

Bei dem Betrachter der Förderanlage handelt es sich um eine Person, die die Anzeigeeinrichtung betrachtet, um wenigstens auch anhand der dortigen Anzeige auf den Betriebszustand der Förderanlage, mögliche Störungen der Förderanlage oder mögliche Ursachen für eine entsprechende Störung der Förderanlage schließen zu können. Hierbei kommen als Betrachter typischerweise Bediener oder Servicekräfte zum Warten und Instandsetzen der Förderanlage in Frage. Mithin wird nachfolgend von Bedienern oder Servicekräften die Rede sein, welche die Förderanlage umfassend die Anzeigeeinrichtung betrachten, um anhand der dortigen Anzeige auf den Betriebszustand der Förderanlage, mögliche Störungen der Förderanlage oder mögliche Ursachen für eine entsprechende Störung der Förderanlage schließen zu können.

Welche Signalform das optische Signal aufweist und in welcher Weise das optische Signal wenigstens teilweise entlang wenigstens eines Transportpfads angezeigt wird, wird über eine Steuereinrichtung festgelegt. Diese Festlegung basiert auf vorgegebenen Kriterien und aktuellen Betriebsparametern der Förderanlage. Wenigstens ein Betriebsparameter der Förderanlage und/oder wenigstens ein einen Betriebsparameter charakterisierendes Signal kann bedarfsweise wenigstens zum Teil anhand von wenigstens einem Sensor ermittelt und an die Steuereinrichtung weitergegeben werden. Die Steuereinrichtung verarbeitet dann die zur Verfügung stehenden und vorgegebenen Informationen und steuert dementsprechend die Anzeigeeinrichtung. Dies beruht dabei auf einem Vergleich von Informationen, die die vorbestimmte Förderung von Stückgütern charakterisieren, und Informationen, die die tatsächliche Förderung der Stückgüter betreffen. Dabei entspricht die vorbestimmte Förderung der Förderung der Stückgüter, die bei normalem Betrieb der Förderanlage zu erwarten sein wird und somit bei Kenntnis der normalen Betriebsparameter ohne Weiteres vorausberechnen lässt. Anders ausgedrückt erhält und/oder ermittelt die Steuereinrichtung Informationen betreffend das Verhältnis der tatsächlichen Förderung wenigstens eines Stückguts entlang des wenigstens einen Transportpfads zur vorbestimmten Förderung des wenigstens einen Stückguts entlang des wenigstens einen Transportpfads.

Infolge des Aufbaus der Förderanlage kann mit wenigstens einem Stückgut ein optisches Signal mitlaufen, wobei das Stückgut entlang des wenigstens einen Transportpfads, und zwar wenigstens abschnittsweise entlangläuft, während das optische Signal parallel dazu entlang der Anzeigeeinrichtung entlangläuft. Da die Steuereinrichtung einen Vergleich zwischen Informationen betreffend die vorbestimmte und somit zu erwartende Förderung eines Stückguts und die tatsächliche Förderung des Stückguts anstellen kann, ist die Steuereinrichtung in der Lage, die Anzeige des optischen Signals entsprechend des Verhältnisses der tatsächlichen Förderung wenigstens eines Stückguts entlang des wenigstens einen Transportpfads zur vorbestimmten Förderung des wenigstens einen Stückguts entlang des wenigstens einen Transportpfads anzuzeigen und darüber hinaus in Abhängigkeit des jeweils tatsächlichen und/oder vorbestimmten Ortes des wenigstens einen Stückguts anzuzeigen. So kann beispielsweise neben dem Stückgut entlang seiner vorbestimmten Förderung ein optisches Signal angezeigt werden, das eine ungestörte Förderung des Stückguts anzeigt. Das Signal wandert dann mit dem Stückgut mit und zwar bedarfsweise alternativ oder zusätzlich entlang des vorbestimmten Transportwegs bzw. Transportpfads des Stückguts. Dies ist jedoch bedarfsweise kaum zu unterscheiden, da das Stückgut sich bei ungestörter Förderung mehr oder weniger in gleicher Weise entlang des Transportpfads bewegt, wie dies vorbestimmt worden ist.

Im Falle eines gestörten Betriebs wird die tatsächliche Förderung des Stückguts entlang des Transportpfads sich jedoch signifikant von der vorbestimmten Förderung des Stückguts unterscheiden. Insbesondere ist das Stückgut zu bestimmten Zeiten deutlich weiter vorne oder hinten als dies vorherberechnet worden ist. Es kann auch sein, dass das Stückgut sich auf einem anderen Transportpfad befindet, als dies vorausberechnet worden ist, etwa weil das Stückgut an einer Gabelung zweier Transportwege falsch abgebogen bzw. falsch umgeleitet worden ist. Dabei kann grundsätzlich im Einzelfall vorgegeben werden, welche Abweichungen noch als innerhalb einer Toleranz liegend oder bereits als Folge eines gestörten Betriebs angesehen werden. Dies lässt sich beispielsweise in der Steuereinrichtung ablegen. Fällt nun der vorbestimmte Ort des Stückguts für einen bestimmten Zeitpunkt mit dem tatsächlichen Ort des Stückguts zu diesem Zeitpunkt signifikant auseinander, so kann jeweils an dem für den jeweiligen Zeitpunkt vorbestimmten Ort des Stückguts zugeordneten Ort der Anzeigeeinrichtung ein optisches Signal angezeigt werden. Es kann aber alternativ oder zusätzlich jeweils an dem dem tatsächlichen Ort des Stückguts zugeordneten Ort der Anzeigeeinrichtung ein optisches Signal angezeigt werden. Da das Stückgut sich tatsächlich und vorherbestimmt entlang des wenigstens einen Transportpfads bewegt, bewegt sich vorzugsweise auch das wenigstens eine optische Signal entlang des wenigstens einen Transportpfads bzw. der Anzeigeeinrichtung, und zwar wenigstens abschnittsweise.

Damit für einen Bediener oder eine Servicekraft erkennbar ist, ob ein Stückgut wie vorherbestimmt oder aufgrund eines gestörten Betriebs der Förderanlage tatsächlich signifikant anders entlang der Förderanlage bewegt wird, kann das optische Signal eine Signalform aufweisen, die dies erkennen lässt. Beispielsweise kann bei ungestörtem Betrieb kein Signal angezeigt werden oder es kann ein weißes oder grünes Signal angezeigt werden. Bei einem gestörten Betrieb kann beispielsweise ein rotes Signal angezeigt werden. Es können aber auch für unterschiedliche Stückgüter Signale in unterschiedlicher Farbe angezeigt werden, wobei dann bedarfsweise jeweils dieselbe Farbe am tatsächlichen Ort und am vorbestimmten Ort angezeigt wird. So ist auch bei sehr vielen Stückgütern einfach ersichtlich, wo sich ein bestimmtes Stückgut bei ungestörtem Betrieb befinden würde und sich beim tatsächlichen Betrieb tatsächlich befindet.

Es können aber alternativ oder zusätzlich zu Signalformen unterschiedlicher Farbe auch Signalformen unterschiedlicher Gestalt verwendet werden. Die Signalformen können dann weitergehende Informationen an den Bediener oder die Servicekraft weiterleiten, die beispielsweise die Art der Störung oder den Ort der Störung betreffen. Beispielsweise kann eine Anzeigeform gewählt werden, die anzeigt, um wieviel Zeit, etwa in Sekunden, oder um welche Distanz, etwa in Metern, das Stückgut schneller oder langsamer transportiert worden ist als vorbestimmt. Es kann auch beispielsweise angezeigt werden, an welcher Gabelung zweier Transportpfade ein bestimmtes Stückgut falsch umgeleitet worden ist.

Die dem Bediener oder der Servicekraft durch die Anzeigeeinrichtung zur Verfügung gestellten Informationen können es dem Bediener oder der Servicekraft der Anzeigeeinrichtung erleichtern, anstehende größere Betriebsstörungen frühzeitig zu erkennen und/oder die bestehenden Betriebsstörungen rasch beheben zu können. Dabei werden dem Bediener oder der Servicekraft wesentliche Informationen direkt an der Förderanlage angezeigt und nicht etwa nur in einer Leitwarte. Außerdem werden die Informationen in Echtzeit und bezogen auf bestimmte Stückgüter angezeigt, da unter bestimmten Bedingungen die Förderung nur einzelner Stückgüter von der vorbestimmten Förderung der Stückgüter abweicht. Dies ist für den Bediener oder die Servicekraft wiederum an der Förderanlage selbst zu erkennen, was dann ein Hinweis auf die jeweilige Störung und die erforderliche Instandhaltung sein kann. Auch kann der Bediener oder die Servicekraft direkt an der Förderanlage erkennen, ob und welchen Erfolg bestimmte Instandhaltungsmaßnahmen auf den Betrieb der Förderanlage haben.

Der besseren Verständlichkeit halber und zur Vermeidung unnötiger Wiederholungen werden vorliegend das Verfahren und die Förderanlage gemeinsam beschrieben, ohne jeweils im Einzelnen zwischen dem Verfahren und der Förderanlage zu unterscheiden. Für den Fachmann ergibt sich jedoch aus dem jeweiligen Kontext, welche Merkmale jeweils hinsichtlich des Verfahrens und der Förderanlage besonders bevorzugt sind.

Bei einer ersten besonders bevorzugten Ausgestaltung des Verfahrens wird das wenigstens eine optische Signal durch ein sich wenigstens abschnittsweise entlang des wenigstens einen Transportpfads erstreckendes LED-Band und/oder Display, insbesondere LCD-Display, der Anzeigeeinrichtung erzeugt. Dies erlaubt es mit sehr hoher Auflösung und mit hoher Geschwindigkeit optische Signale anzuzeigen und entlang des wenigstens einen Transportpfads wandern zu lassen. Apparativ einfacher ist es dabei, sich alternativ oder zusätzlich einer Projektionseinrichtung der Anzeigeeinrichtung zu bedienen, die wenigstens ein optisches Signal auf eine sich wenigstens abschnittsweise entlang des wenigstens einen Transportpfads erstreckende Projektionsbahn der Anzeigeeinrichtung projizieren kann.

Um einen möglichst guten Vergleich zwischen dem optischen Signal und dem tatsächlichen Stückgut für den Bediener oder die Servicekraft zu ermöglichen, bietet es sich an, wenn das wenigstens eine optische Signal mit einer Längserstreckung entlang des Transportpfads angezeigt wird, die wenigstens im Wesentlichen der Längserstreckung des wenigstens einen, dem Signal zugeordneten Stückguts entspricht. In diesem Fall ist einfach festzustellen, ob das optische, den vorbestimmten Transport des Stückguts darstellende Signal mit dem tatsächlichen Stückgut in Überdeckung ist oder ob es zu einer Verschiebung zwischen dem tatsächlichen Stückgut und dem durch das optische Signal repräsentierte Stückgut der vorbestimmten Förderung in der Längsrichtung des Transportpfads kommt.

Alternativ oder zusätzlich kann das wenigstens eine optische Signal wenigstens abschnittsweise derart entlang des Transportpfads bewegt werden, wie es der vorbestimmten Förderung des wenigstens einen, dem wenigstens einen Signal zugeordneten Stückguts entlang des wenigstens einen Transportpfads entspricht. Dies macht einen Vergleich zwischen der vorbestimmten Förderung des Stückguts und der tatsächlichen Förderung des entsprechenden Stückguts leicht möglich. Aus dem möglicherweise auftretenden Unterschied zwischen dem optischen Signal und dem Transport des tatsächlichen Stückguts kann der Bediener in vielen Fällen sofort auf die Störung und deren Ursache schließen, was das Instandsetzen der Förderanlage beschleunigt. Dabei kann auch der Vergleich unterschiedlicher Stückgüter Aufschluss über die Störung und deren Ursache liefern. Beispielsweise müssen aufeinanderfolgende, tatsächliche Stückgüter nicht in gleicher Weise abweichend zur vorbestimmten Förderung transportiert werden. Es kann auch vorkommen, dass eine entsprechende Abweichung nur bei bestimmten Stückgütern oder periodisch auftritt, was ein Indiz für eine bestimmte Störung sein kann. Es kann aber auch sein, dass der Transport verschiedener Stückgüter auf jeweils andere Weise von der für die Stückgüter vorbestimmten Förderung abweicht.

Um zu erkennen, ob der Transport eines Stückguts wie gewünscht erfolgt oder in welcher Weise der tatsächliche Transport des Stückguts von dem vorbestimmten Transport desselben Stückguts abweicht, bietet es sich an, wenn das wenigstens eine optische Signal und das wenigstens eine dem wenigstens einen Signal zugeordnete Stückgut bei ungestörtem Transport des wenigstens einen Stückguts einander entsprechend entlang des wenigstens einen Transportpfads und entlang der Anzeigeeinrichtung bewegt werden. Wandert das optische Signal entsprechend des Transports des Stückguts entlang des Transportpfads entlang der Anzeigeeinrichtung, lässt sich auf einen ungestörten Betrieb der Förderanlage und Transport des Stückguts schließen.

Damit der Bediener oder die Servicekraft der Förderanlage leicht erkennen kann, wo eine Störung des Betriebs der Förderanlage auftritt und wodurch diese Störung verursacht wird, kann sich die Signalform des optischen Signals beim Passieren eines Orts, an dem eine vorbestimmte Abweichung der tatsächlichen Förderung wenigstens eines Stückguts entlang des wenigstens einen Transportpfads von der vorbestimmten Förderung des wenigstens einen Stückguts entlang des wenigstens einen Transportpfads auftritt, verändern. Beispielsweise kann die Signalform des optischen Signals mittels der Steuereinrichtung von einer einen störungsfreien Transport des wenigstens einen Stückguts charakterisierenden Signalform zu einer einen gestörten Transport des wenigstens einen Stückguts charakterisierenden Signalform verändert werden. Dem Bediener oder der Servicekraft der Förderanlage wird so zu erkennen gegeben, wenn der Transport eines Stückguts gestört ist, ab wann der Transport eines Stückguts gestört ist und wo die Störung auftritt. Dies gilt insbesondere dann, wenn das mit dem wenigstens einen Stückgut mitlaufende, optische Signal wenigstens eine einen gestörten Transport des wenigstens einen Stückguts charakterisierende Signalform beibehält, solange das Signal mit dem Stückgut entlang des wenigstens einen Transportpfads mitläuft und einen gestörten Transport des wenigstens einen Stückguts am jeweiligen Ort der Anzeige vorliegt.

Sollte die Störung des Betriebs wieder aufgehoben werden, so dass das entsprechende Stückgut ab einem bestimmten Ort entlang des Transportpfads wieder wie vorherbestimmt gefördert wird, kann die Signalform bedarfsweise wieder eine eine ungestörte Förderung des Stückguts charakterisierende Signalform annehmen. Alternativ kann aber weiter eine Signalform angezeigt werden, die einen gestörten Betrieb signalisiert. Dabei kann es besonders bevorzugt sein, wenn sich die Signalform bei wieder bestimmungsgemäßer Förderung von der Signalform unterschiedet, die zuvor angezeigt wurde, als die Förderung des Stückguts nicht mit der bestimmungsgemäßen Förderung übereingestimmt hat. So wird für den Bediener oder die Servicekraft erkennbar, dass nacheinander zwei nicht vorbestimmte Ereignisse eingetreten sind, die die Förderung des Stückguts auf nicht vorbestimmte Weise beeinflusst haben. Dies gilt grundsätzlich auch für den Fall, dass ein Stückgut nacheinander während des Transports entlang der Förderanlage mehrere Störungen erfährt, die nicht dazu führen, dass der Transport des Stückguts an einem bestimmten Ort wieder wie vorherbestimmt erfolgt. Durch die dann wechselnden Signalformen entlang des wenigstens einen Transportpfads wird für den Bediener oder die Servicekraft erkennbar, dass die Förderung des Stückguts mehrfach nacheinander gestört worden ist. Diese Erkenntnis führt dazu, dass die Ursachen der einzelnen Störungen schneller behoben werden können.

Um den Informationsgehalt der optischen Anzeige für den Bediener oder die Servicekraft zu erhöhen, so dass dieser unterschiedliche Betriebszustände und Störungen unterscheiden kann, die dem Stückgut und dessen Transport selbst nicht ohne Weiteres angesehen werden können, bietet es sich an, wenn die wenigstens eine einen störungsfreien Transport eines Stückguts charakterisierende Signalform und/oder die einen gestörten Transport eines Stückguts charakterisierende wenigstens eine Signalform eine vorbestimmte Farbe und/oder ein vorbestimmtes Zeichen aufweist. Es können beispielsweise unterschiedliche optische Signale und/oder Signalformen in unterschiedlichen Farben angezeigt werden, wenn ein Stückgut zu schnell, zu langsam oder mit der richtigen Geschwindigkeit transportiert wird. Es kann auch zur Anzeige unterschiedlicher Signalformen und Farben kommen, wenn nur der Transport einzelner Stückgüter gestört ist oder wenn eine bestimme Anzahl von nacheinander transportierten Stückgütern auf dieselbe Weise und/oder in demselben Umfang gestört transportiert werden, also hinsichtlich ihres Transports von dem jeweils vorbestimmten Transport abweichen.

Wird von der Steuereinrichtung erkannt oder ermittelt, dass ab einem bestimmten Ort entlang des Transportpfads eine vorbestimmte Abweichung zwischen dem vorbestimmten Transport des Stückguts von dem tatsächlichen Transport des Stückguts überschritten wird, kann dieser Ort als Ort der Störung identifiziert und dem Bediener oder der Servicekraft über die Anzeigeeinrichtung angezeigt werden. Beispielsweise kann die wenigstens eine einen gestörten Transport eines Stückguts charakterisierende Signalform an einem solchen Ort der Störung als Ort am Übergang von dem ungestörten Transport zum gestörten Transport wenigstens eines Stückguts dauerhaft oder periodisch angezeigt werden. Die dauerhafte Anzeige hat dabei den Vorteil, dass der Ort der Störung durchgängig erkannt werden kann. Die periodische Anzeige kann dabei bedarfsweise immer dann erfolgen, wenn eine entsprechende Abweichung von dem vorbestimmten Transport eines Stückguts auftritt, um das entsprechende Auftreten der entsprechenden Störung anzuzeigen. Es kann aber auch eine periodisch blinkende Anzeige der Signalform erfolgen, die auch von größerer Distanz besser zu erkennen ist und dem Bediener oder der Servicekraft daher zügig zum Ort der Störung leiten kann.

Bedarfsweise ist es, um Informationen über unterschiedliche Betriebszustände und Abweichungen vom bestimmungsgemäßen Betrieb der Förderanlage zu erhalten, hilfreich, wenn die Anzeigeeinrichtung wenigstens eine Signalform zum Anzeigen eines fehlerfreien Zustands, wenigstens eine Signalform zum Anzeigen wenigstens eines fehlerhaften Zustands, wenigstens eine Signalform zum Anzeigen wenigstens eines fehleranbahnenden Zustands und/oder wenigstens eine Signalform zum Anzeigen wenigstens eines arbeitsfähigen Zustands anzeigen kann. Die Signalform kann dabei lokal an einem Ort angezeigt werden, der den entsprechenden Zustand aufweist oder mit einem Stückgut mitwandern, das dem entsprechenden Zustand unterworfen ist. Beim fehlerfreien Zustand ist wenigstens ein vorgegebener Parameter in Bezug auf die Förderung wenigstens eines Stückguts innerhalb eines vorgegebenen Toleranzbereichs. Bei einem fehlerhaften Zustand ist wenigstens ein Parameter in Bezug auf die Förderung wenigstens eines Stückguts außerhalb eines vorgegebenen Toleranzbereichs. Bei einem fehleranbahnenden Zustand ist wenigstens ein vorgegebener Parameter in Bezug auf die Förderung wenigstens eines Stückguts innerhalb eines vorgegebenen Toleranzbereichs, nähert sich aber immer weiter einer Toleranzgrenze des Toleranzbereichs an, so dass ein baldiges Überschreiten der Toleranzgrenze zu erwarten ist. Vorliegend kann bei den Parametern zwischen Haupt- und Nebenparametern unterschieden werden. Die Hauptparameter sind dabei bedeutender für die Förderung der Stückgüter. Im Falle von Haupt- und Nebenparametern kann ein fehlerfreier Zustand dadurch gekennzeichnet sein, dass der wenigstens eine Hauptparameter und der wenigstens eine Nebenparameter in Bezug auf die Förderung wenigstens eines Stückguts innerhalb eines vorgegebenen Toleranzbereichs sind, während ein arbeitsfähiger Zustand sich dadurch auszeichnet, dass lediglich der wenigstens eine Nebenparameter außerhalb des Toleranzbereichs und der wenigstens eine Hauptparameter innerhalb des Toleranzbereichs liegt. Der fehlerhafte Zustand kann dann gegeben sein, wenn sich wenigstens ein Hauptparameter außerhalb des Toleranzbereichs befindet. Beim fehleranbahnenden Zustand kann zwischen dem wenigstens einen Hauptparameter und dem wenigstens einen Nebenparameter unterschieden werden. Erforderlich ist dies jedoch nicht.

Alternativ oder zusätzlich kann das Verhältnis der tatsächliche Förderung wenigstens eines Stückguts entlang des wenigstens einen Transportpfads zur vorbestimmten Förderung des wenigstens einen Stückguts entlang des wenigstens einen Transportpfads in Abhängigkeit des jeweiligen Ortes des wenigstens einen Stückguts durch wenigstens einen Vergleich zwischen wenigstens einem vorgegebenen Normativwert und wenigstens einem Messwert betreffend den Transport wenigstens eines Stückguts entlang des wenigstens einen Transportpfads ermittelt werden. So kann an jedem Ort, an dem diese Ermittlung durchgeführt wird, ein Zustand der Förderung eines bestimmten Stückguts und/oder der Förderanlage ermittelt werden. Der Zustand kann dann über die Anzeigeeinrichtung angezeigt werden, und zwar bedarfsweise über eine Signalform lokal an einem Ort, der den entsprechenden Zustand repräsentiert, oder mitwandernd mit dem Stückgut, das dem entsprechenden Zustand unterworfen ist. Als Normativwert kommt dabei beispielsweise ein Nominalwert des entsprechenden Parameters in Frage, der nach dem Einlaufen der Fördereinrichtung erreicht wird. Der Normativwert kann einem eingestellten Parameter entsprechen oder sich je nach den Einstellungen der Förderanlage ergeben. Der Nominalwert kann bedarfsweise als der technisch erreichbare Wert des Parameters angesehen werden, der sich mit der Förderanlage und den getroffenen Einstellungen erreichen lässt. Der Normativwert kann auch ein Normalwert sein, der alle Werte des Parameters zwischen den Toleranzgrenzen des Parameters umfasst. Der Toleranzgrenzwert als Normativwert charakterisiert die Toleranzgrenzen außerhalb derer kein arbeitsfähiger Zustand mehr gegeben ist. Als Normativwert kommt auch ein Eingriffswert in Frage, der wenigstens einen Grenzwert darstellt, bei dessen Über- und/oder Unterschreiten eine Ausfallfreiheit der Förderanlage bis zur nächsten geplanten Wartung oder Instandsetzung nicht sichergestellt ist.

Damit der Bediener oder die Servicekraft der Förderanlage rasch über mögliche Störungen und deren Ursachen informiert ist, kann es zweckmäßig sein, wenn nicht lediglich für einzelne Stückgüter und jeweils unabhängig voneinander die tatsächliche Förderung des Stückguts ins Verhältnis mit der vorbestimmten Förderung des entsprechenden Stückguts gesetzt wird. Zusätzliche Informationen lassen sich nämlich ableiten, wenn die nachfolgenden Stückgüter in derselben Weise von der vorbestimmten Förderung abweichen, gerade nicht von der vorbestimmten Förderung abweichen oder auf eine andere Weise von der vorbestimmten Förderung abweichen. Diese Informationen erlauben es, zielgerichtet auf die Ursache der entsprechenden Störung zu schließen. Mithin kann das Verhältnis der tatsächlichen Förderung einer Reihe von nacheinander entlang des wenigstens einen Transportpfads transportierter Stückgüter zur vorbestimmten Förderung derselben Reihe von Stückgütern entlang des wenigstens einen Transportpfads in Abhängigkeit der jeweiligen Orte der entsprechenden Stückguter für jedes Stückgut ermittelt und mit den anderen, für die anderen Stückgüter der Reihe von Stückgütern ermittelten Verhältnissen verglichen werden.

Alternativ oder zusätzlich kann anhand des Verhältnisses der tatsächlichen Förderung wenigstens eines Stückguts entlang des wenigstens einen Transportpfads zur vorbestimmten Förderung des wenigstens einen Stückguts entlang des wenigstens einen Transportpfads in Abhängigkeit des jeweiligen Ortes des wenigstens einen Stückguts von der Steuereinrichtung auf wenigstens eine Ursache für eine Abweichung zwischen der vorbestimmten Förderung und der tatsächlichen Förderung des entsprechenden Stückguts geschlossen werden. Dies ist beispielsweise dann zielgerichtet möglich, wenn in der Steuereinrichtung der Zusammenhang von bestimmten Störungen der Förderanlage und sich daraus ergebenden Verhältnissen zwischen der tatsächlichen Förderung und der vorbestimmten Förderung von Stückgütern entlang eines bestimmten Transportpfads hinterlegt sind. So kann der Bediener oder die Servicekraft der Fördereinrichtung zunächst der von der Steuereinrichtung als wahrscheinlich vorgegebenen Störung nachgehen, um die Störung möglichst rasch beheben zu können. Dies wird dadurch weiter vereinfacht, dass wenigstens ein Signal der Anzeigeeinrichtung wenigstens abschnittsweise, insbesondere wiederholt, entlang des Transportpfads des wenigstens einen Stückguts in Richtung des der wenigstens einen Ursache zugeordneten Entstehungsorts wandert und/oder wenigstens ein Signal der Anzeigeeinrichtung an einem dem Entstehungsort zugeordneten Ort der Anzeigeeinrichtung angezeigt wird. Alternativ oder zusätzlich kann das wenigstens eine Signal, insbesondere wiederholt, von dem dem Stückgut tatsächlich zugeordneten Ort bis zu dem Ort der Störung als Ort am Übergang von dem ungestörten Transport zum gestörten Transport wenigstens eines Stückguts wandern. In beiden Fällen wird der Bediener oder die Servicekraft der Förderanlage recht rasch zu dem Ort geleitet, an dem ein Eingreifen zum Beheben der Störung wahrscheinlich vorzunehmen ist.

Dies kann noch dadurch unterstützt werden, indem das wenigstens eine Signal, insbesondere wiederholt, von dem Ort der Störung als Ort am Übergang von dem ungestörten Transport zum gestörten Transport wenigstens eines Stückguts bis zu dem der Störung zugeordneten Entstehungsort zugeordneten Ort der Anzeigeeinrichtung wandert. Der Bediener oder die Servicekraft der Förderanlage kann dann sehr einfach dem Signal zum Ort des vermuteten Eingreifens folgen.

Bei einer ersten besonders bevorzugten Ausgestaltung der Förderanlage umfasst die Anzeigeeinrichtung ein sich wenigstens abschnittsweise entlang des wenigstens einen Transportpfads erstreckendes LED-Band und/oder eine Projektionseinrichtung zum Projizieren des Signals auf eine sich wenigstens abschnittsweise entlang des wenigstens einen Transportpfads erstreckende Projektionsbahn und/oder ein sich wenigstens abschnittsweise entlang des wenigstens einen Transportpfads erstreckendes Display, insbesondere LCD-Display. So können sehr einfach und schnell auch sehr unterschiedliche Signale an unterschiedlichen Orten entlang des wenigstens einen Transportpfads angezeigt werden, um den Bediener oder die Servicekraft der Förderanlage sehr schnell und umfassend über mögliche Störungen und/oder deren Ursachen zu informieren.

Nachfolgend wird die Erfindung anhand einer lediglich Ausführungsbeispiele darstellenden Zeichnung näher beschrieben. In der Zeichnung zeigt
- Fig. 1: eine erfindungsgemäße Förderanlage in einer schematischen Draufsicht,
- Fig. 2A-C: ein Detail einer erfindungsgemäßen Förderanlage in unterschiedlichen Betriebszuständen in einer schematischen Seitenansicht,
- Fig. 3: ein Detail einer erfindungsgemäßen Förderanlage in einer schematischen Seitenansicht,
- Fig. 4: ein Detail einer erfindungsgemäßen Förderanlage in einer schematischen Seitenansicht,
- Fig. 5A-C: ein Detail einer erfindungsgemäßen Förderanlage in unterschiedlichen Betriebszuständen in einer schematischen Seitenansicht,
- Fig. 6: ein Detail einer erfindungsgemäßen Förderanlage in einer schematischen Seitenansicht,
- Fig. 7: ein Detail einer erfindungsgemäßen Förderanlage in einer schematischen Seitenansicht und
- Fig. 8: ein Detail einer erfindungsgemäßen Förderanlage in einer schematischen Seitenansicht.

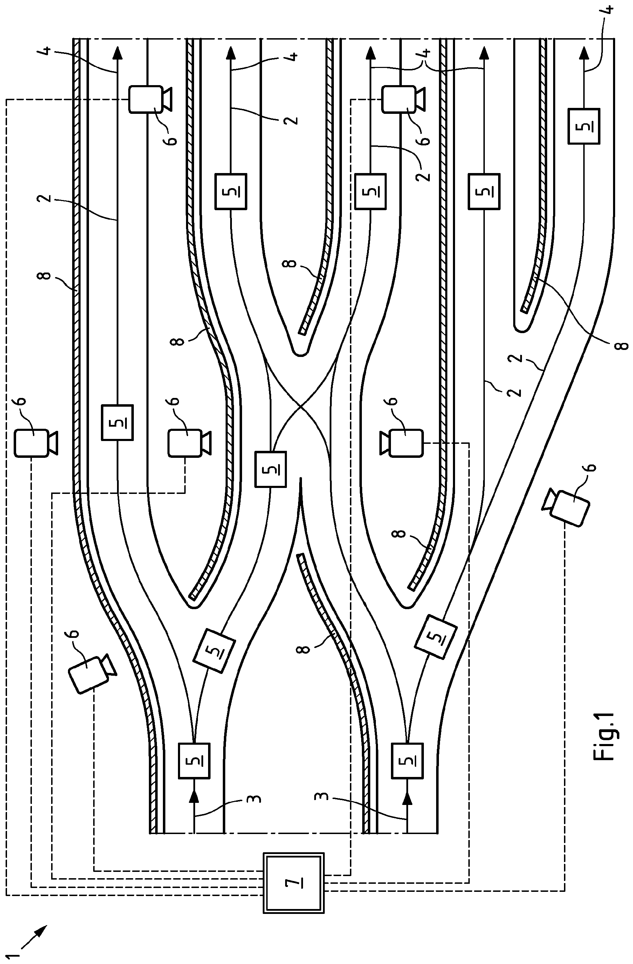

In der Fig. 1 ist eine Förderanlage 1 dargestellt, die eine Mehrzahl von Transportpfaden 2 bereitstellt. Die Transportpfade 2 gehen von unterschiedlichen Ausgangspositionen 3 aus und enden je nach dem jeweiligen Transportpfad 2 in unterschiedlichen Endpositionen 4. Die Förderanlage 1 kann auch deutlich anders ausgebildet sein. Wichtig ist jedoch, dass die Förderanlage 1 wenigstens einen Transportpfad 2 zum Transport von vereinzelten Stückgütern 5 aufweist, bei denen es sich um Packstücke, insbesondere Paketsendungen handeln kann. Die Stückgüter 5 werden in den Ausgangsportionen 3 auf die Förderanlage 1 aufgegeben. Die Förderanlage 1 ist für bestimmte Transport- und/oder Sortieraufgaben eingestellt. Anhand der Einstellungen und entsprechenden Vorgaben kann wenigstens für Einzelne oder bestimmte Stückgüter 5 deren Förderung zeitlich gesehen entlang des vorgegebenen Transportpfads 2 vorausberechnet werden. Wie sich das entsprechende Stückgut 5 dann tatsächlich zeitlich gesehen entlang des Transportpfads 2 bewegt, kann mittels Sensoren 6 erfasst werden, die entlang des wenigstens einen Transportpfads 2, insbesondere entlang der Förderanlage 1 als solches, verteilt sind. Bei den Sensoren 6 kann es sich beispielsweise um Scanner handeln, die einen an dem jeweiligen Stückgut 5 vorgesehenen Code erfassen und so ermitteln, wo sich die Stückgüter 5 zu einem bestimmen Zeitpunkt befinden. Es können aber die Stückgüter 5 mit sogenannten RFID-Tags oder dergleichen versehen sein, die durch in die Förderanlage 1 integrierte Sensoren 6 in Form von Leseeinheiten zum Auslesen der RFID-Tags erfasst werden. Auch so wird ermittelt, welche Stückgüter 5 sich zu welcher Zeit an welchem Ort befinden. Andere geeignete Sensoren sind denkbar und an sich bekannt.

Die über die Förderanlage 1 verteilten Sensoren 6 sind mit einer Steuereinrichtung 7 verbunden, an die die Sensoren 6 Signale oder Informationen betreffend die Positionen der Stückgüter 5 zu bestimmten Zeitpunkten senden. Die Steuereinrichtung 7 erhält oder ermittelt zudem Informationen betreffend die vorherbestimmte zeitliche Förderung der Stückgüter 5 entlang der Transportpfade 2. Die Steuereinrichtung 7 verarbeitet diese Signale oder Informationen und stellt die tatsächliche Förderung der Stückgüter 5 für bestimmte Zeitpunkte ins Verhältnis zu der vorherbestimmten Förderung der Stückgüter 5 für diese Zeitpunkte. Es ergibt sich also ein Vergleich zwischen der theoretischen, also vorab berechneten Förderung der Stückgüter 5 mit der praktischen, also der tatsächlichen Förderung der Stückgüter 5. Anhand dieses Vergleichs bzw. anhand dieses Verhältnisses steuert die Steuereinrichtung 7 eine Anzeigeeinrichtung 8, die sich bei der dargestellten Förderanlage 1 entlang der Transportpfade 2 erstreckt. Die Anzeigeeinrichtung 8 kann gesteuert von der Steuereinrichtung 7 optische Signale anzeigen und diese Signale bestimmten Stückgütern 5 zuordnen, so dass Stückgütern 5 zugeordnete optische Signale angezeigt werden könne, die anhängig davon sind, wie der Vergleich der vorbestimmten Förderung und der tatsächlichen Förderung für dieses entsprechende Stückgut 5 ausfällt. Das optische Signal wird jedoch nicht nur einmal an einem bestimmten Ort entlang des Transportpfads des entsprechenden Stückguts angezeigt. Vielmehr läuft das Signal mit dem, jedenfalls zugeordnet zu dem, Stückgut 5 mit entlang des wenigstens einen Transportpfads 2. Deshalb ist auch die Anzeigeeinrichtung 8 nicht lokal sondern wenigstens abschnittsweise entlang wenigstens eines Transportpfads 2 angeordnet.

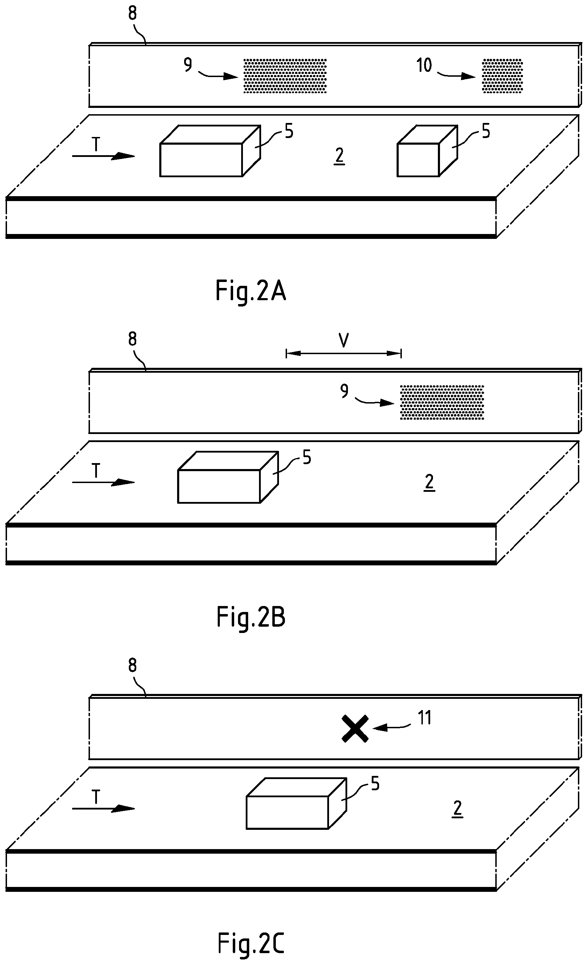

Die Ansteuerung der Anzeigeeinrichtung 8 durch die Steuereinrichtung 7 zugeordnet zum tatsächlichen Transport bestimmter Stückgüter 5 ist beispielsweise in den Fig. 2A-C dargestellt. In der Fig. 2A sind zwei Stückgüter 5 unterschiedlicher Länge in der Transportrichtung T dargestellt. Den Orten der Stückgüter 5 zugeordnet zeigt die Anzeigeeinrichtung 8 optische Signale 9,10 an, deren Längserstreckung entlang des Transportpfads 2 wenigstens im Wesentlichen mit der Längserstreckung der Stückgüter 5 übereinstimmt. Die optischen Signale 9,10 wandern mit den Stückgütern 5 entlang des Transportpfads 2. Dabei veranschaulichen die optischen Signale 9,10 die vorausberechnete Anordnung der Stückgüter 5 zu den unterschiedlichen Zeiten der Förderung derselben. Aus dem Umstand, dass sich die Stückgüter 5 in gleicher Weise entlang des Transportpfads 2 bewegen, wie die zugehörigen optischen Signale 9,10 entlang der Anzeigeeinrichtung 8, ohne dass es dabei zu keinem nennenswerten Versatz zwischen Stückgut 5 und zugeordnetem optischen Signal 9,10 kommt, kann abgelesen werden, dass der Transport der Stückgüter 5 wie vorherbestimmt erfolgt. Somit arbeitet die Förderanlage 1 offensichtlich wie eingestellt und gewünscht. Störungen des Betriebs sind mithin nicht zu befürchten.

In der Fig. 2B ist dagegen eine gestörte Förderung eines Stückguts 5 dargestellt. Die Bewegung des optischen Signals 9 entlang der Anzeigeeinrichtung 8 repräsentiert die Förderung des Stückguts 5 entlang der Transportbahn 2 bei ungestörtem Betrieb, wie sie vorab berechnet wurde. Die tatsächliche Förderung des zugehörigen Stückguts 5 hinkt der vorabbestimmten Förderung des Stückguts 5 mit einem gewissen Versatz V hinterher. Dies ist ohne Weiteres aus einem Vergleich zwischen dem optischen Signal 5 repräsentierend den zu erwartenden Transport des Stückguts 5 mit dem tatsächlichen Transport des Stückguts 5 abzulesen. Alternativ oder zusätzlich zu einem optischen Signal 9 repräsentierend den erwarteten Transport des Stückguts 5, das bei gestörtem Betrieb der Förderanlage 1 einen nicht unerheblichen Abstand zu dem tatsächlichen Stückgut 5 aufweisen kann, kann mit dem tatsächlichen Transport des Stückguts 5 und diesem immer direkt zugeordnet bzw. parallel zu diesem ein optisches Signal 11 angezeigt werden aus dessen Signalform, hier beispielsweise einem roten Kreuz, direkt ersichtlich ist, dass das entsprechende Stückgut 5 aktuell nicht wie zu erwarten gewesen wäre entlang des Transportpfads 2 transportiert wird. Die Förderung dieses besonderen Stückguts 5 ist mithin gestört. Dabei kann die Art der Signalform oder dessen Farbe zusätzlich die Art und/oder den Umfang der Störung der Förderung des Stückguts 5 repräsentieren. Da der Betreiber der Förderanlage 1 oder eine Servicekraft über die Anzeigeeinrichtungen 8 gemäß Fig. 2B-C vor Ort in der Förderanlage aktuelle Informationen über die Störung erhält, kann rasch auf eine Ursache geschlossen und die Störung mithin rasch behoben werden. Die Verfügbarkeit der Förderanlage 1 steigt dadurch gegebenenfalls signifikant an.

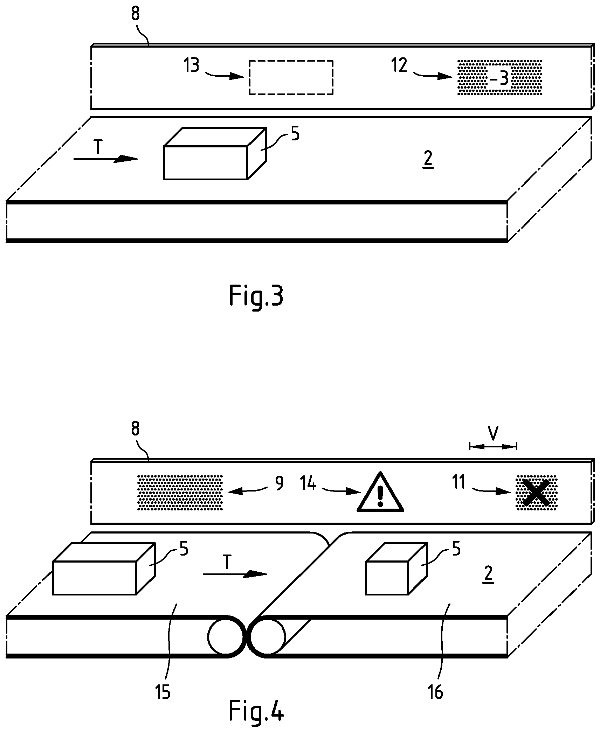

Um den Informationsgehalt für den Betreiber der Förderanlage 1 oder eine Servicekraft weiter zu erhöhen, auch wenn sehr viele Stückguter 5 in kurzen Abständen entlang eines Transportpfads 2 transportiert werden, kann sich eine Darstellung gemäß Fig. 3 anbieten. Im Falle einer Störung sind nämlich die tatsächlichen Stückgüter 5 bedarfsweise nur schwer den optischen Signalen 12 zuzuordnen, die die ungestörte Förderung der Stückgüter 5 repräsentieren. Dann ist einem Stückgut 5 ein optisches Signal 13 einer Farbe zugeordnet, welche mit der Farbe des optischen Signals 12 übereinstimmt, das die ungestörte Förderung des entsprechenden Stückguts 5 repräsentiert. Unterschiedlichen Stückgütern 5 können dabei unterschiedliche Farben zugeordnet werden, so dass eine Zuordnung der Stückgüter 5 zu den optischen Signalen 12 erleichtert, die die ungestörte Förderung derselben Stückgüter 5 repräsentieren. Alternativ oder zusätzlich kann das optische Signal 12, das den vorherbestimmten Transport eines Stückguts 5 repräsentiert, welches aber nicht wie vorbestimmt transportiert worden ist, eine Information über das Maß der Abweichung der tatsächlichen Förderung zu der erwarteten Förderung enthalten. Vorliegend wird "-3" angezeigt, was auf einen Verzug von 3 Sekunden oder um 3 Meter hinweisen kann. Andere Angaben etwa in Form von Symbolen sind ebenfalls denkbar.

Entsprechend der Fig. 4 kann bei der Überwachung der Förderung der Stückgüter 5 und dem regelmäßigen Vergleich mit der erwarteten Förderung der Stückgüter 5 die Steuereinrichtung 7 ermitteln, wo in etwa eine Störung der Förderung erstmalig aufgetreten ist und diesen Ort dann über ein optisches Signal 14 auf der Anzeigeeinrichtung 8 für den Betreiber der Förderanlage 1 oder eine Servicekraft anzeigen. Dieser wird so rasch zum Ort der Störung geleitet. Dabei ist der Ort der Störung rein exemplarisch als Übergang der Stückgüter 5 von einer Fördereinrichtung 15 der Förderanlage 1 auf eine nachfolgende Fördereinrichtung 16 der Förderanlage 1. Vorliegend sind zwei Stückgüter 5 dargestellt, wobei das links dargestellte Stückgut 5 sich synchron mit der optischen Anzeige 9 bewegt, die die zu erwartende Förderung des Stückguts 5 anzeigt. Das rechts dargestellte Stückgut 5 weist dagegen einen Versatz V zu dem zugeordneten optischen Signal 11 auf, das die erwartete Förderung desselben repräsentiert. Da dies auf eine gestörte Förderung des Stückguts 5 zurückzuführen ist, setzt sich das optische Signal 11 aus einer Signalform repräsentierend die Länge des Stückguts 5 und einer Signalform in Form eines roten Kreuzes zusammen. Zudem wird über die Steuereinrichtung 7 der Ort der Entstehung der Störung durch ein optisches Signal 14 beispielsweise in Form eines Dreiecks gekennzeichnet. Dieses optische Signal 14 wandert nicht mit einem Stückgut 5 über die Anzeigeeinrichtung 8, sondern verharrt so lange in dieser Position, bis die Störung der Förderung der Stückgüter 5 an dieser Stelle nicht mehr auftritt.

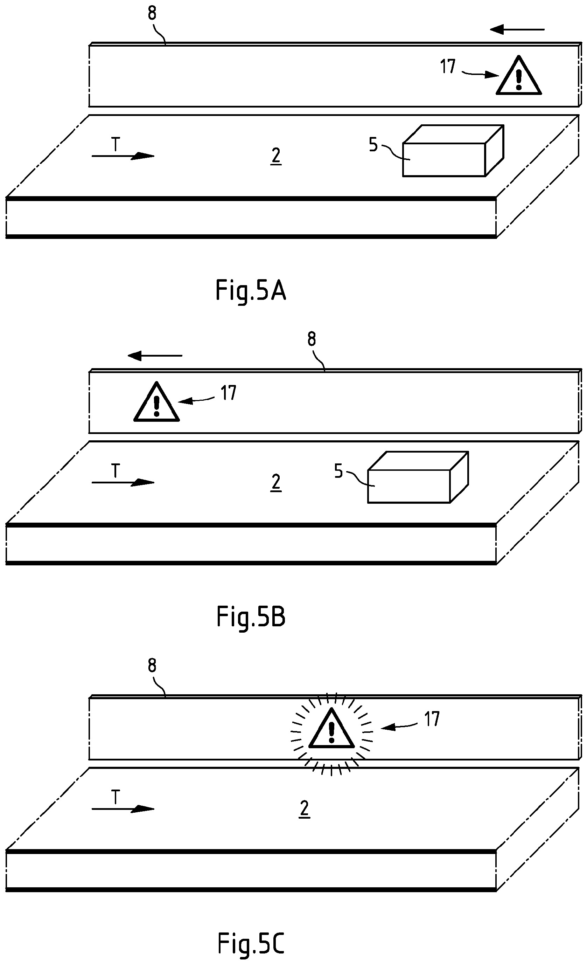

Wenn der Ort der Störung wenigstens ansatzweise bekannt ist, kann ausgehend von einem Ort der Anzeigeeinrichtung 8, der dem Ort zugeordnet ist, an dem sich gerade ein Stückgut 5 befindet, das durch die entsprechende Störung beeinträchtigt worden ist, ein optisches Signal 17 angezeigt werden, das eine Störung repräsentiert, hier etwa ein Dreieck, und sodann entgegen der Transportrichtung T des Stückguts 5 entlang der Anzeigeeinrichtung 8 bis zu dem Ort bewegt werden, der dem Ort der vermuteten Störung entlang des Transportpfads 2 zugeordnet ist, bewegt werden. In der Fig. 5A ist dargestellt, wie das optische Signal 17 repräsentierend die Störung neben dem gestört geförderten Stückgut 5 dargestellt ist. In der Fig. 5B ist das Stückgut 5 weiter in der Transportrichtung T weiterbewegt und das optische Signal 17 weiter entgegen dieser Transportrichtung T bewegt worden. In der Fig. 5C ist das optische Signal 17 am Ort der Störung dargestellt, wo das optische Signal 17 zur ergänzenden Anzeige des Orts der Störung eine Weile verharren und/oder blinken kann.

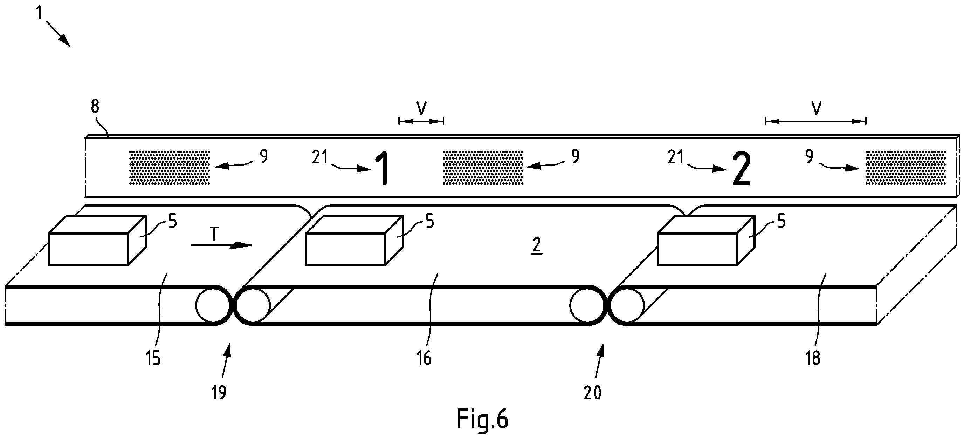

In der Fig. 6 ist exemplarisch eine Förderanlage 1 dargestellt, bei der die Stückgüter 5 entlang des Transportpfads 2 drei unterschiedliche Fördereinrichtungen 15,16,18 passieren müssen und wobei an den Übergängen 19,20 zwischen den Fördereinrichtungen 15,16,18 die Förderung der Stückgüter 5 gestört wird. Die Übergänge 19,20 der Fördereinrichtungen 15,16,18 sind hier nur exemplarisch illustriert. Andere Orte der Störung der Förderung der Stückgüter 5 sind denkbar. Ein Stückgut 5 vor dem ersten Übergang 19 ist noch ungestört und das dem Stückgut 5 zugeordnete optische Signal 9 läuft synchron mit dem Stückgut 5 entlang dem Transportpfad 2 in der Transportrichtung T mit, nur eben auf der Anzeigeeinrichtung 8. Nach dem ersten Übergang 19 kommt es zu einem Versatz V zwischen dem Stückgut 5 und mit diesem verknüpften optischen Signal 9. Zudem wird benachbart zu dem Stückgut 5 oder dem optischen Signal 9 ein Symbol 21 angezeigt, das für eine erste Störung der Förderung steht. Hierbei handelt es sich vorliegend exemplarisch um eine "1". Nach dem nächsten Übergang 20 zwischen zwei nachfolgenden Fördereinrichtungen 16,18 wird der Versatz V zwischen dem Stückgut 5 und dem dem Stückgut 5 zugeordneten optischen Signal 9 noch größer, weil es zu einer zweiten Störung gekommen ist. Dies wird vorliegend durch ein optisches Signal in Form einer "2" benachbart zum Stückgut 5 angezeigt. Die Symbole oder Signale 21 könnte aber auch im Bereich des anderen optischen Signals 9 zu diesem Stückgut 5 angezeigt werden, welches die jeweils zu erwartende Position des Stückguts 5 kennzeichnet. Alternativ oder zusätzlich kommen auch andere Symbole in Frage.

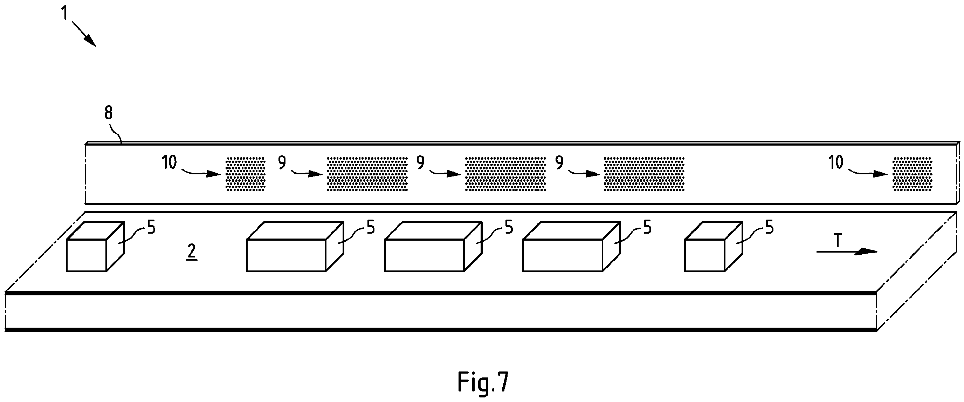

In der Fig. 7 ist eine Förderanlage 1 im Detail dargestellt, bei dem nicht alle Stückgüter 5, sondern nur bestimmte Stückgüter 5 nicht wie zu erwarten gefördert werden. Vorliegend kann die Störung entweder periodisch auftreten oder aber bei kleineren Stückgütern 5. Genauer lässt sich dies anhand des dargestellten Details nicht erkennen. Dies wäre aber bei genauer Beobachtung der realen Fördereinrichtung 1 möglich. Ganz links ist ein Stückgut 5 auf einem Transportpfad 2 dargestellt, das dem zugehörigen optischen Signal 10 hinterherhinkt. Die Förderung erfolgt also entgegen der Erwartung verzögert. Dasselbe ist bei dem ganz rechts dargestellten Stückgut 5 der Fall. Die drei Stückgüter 5 dazwischen bewegen sich jedoch synchron und benachbart zu den zugehörigen optischen Signalen 9, repräsentierend die erwartete Förderung der Stückgüter 5. Also kann die Störung nur jedes vierte Stückgut 5 betreffen oder aber nur die kleineren Stückgüter 5. Dies sind zusätzliche Informationen, die auf die Ursache der Störung hindeuten können.

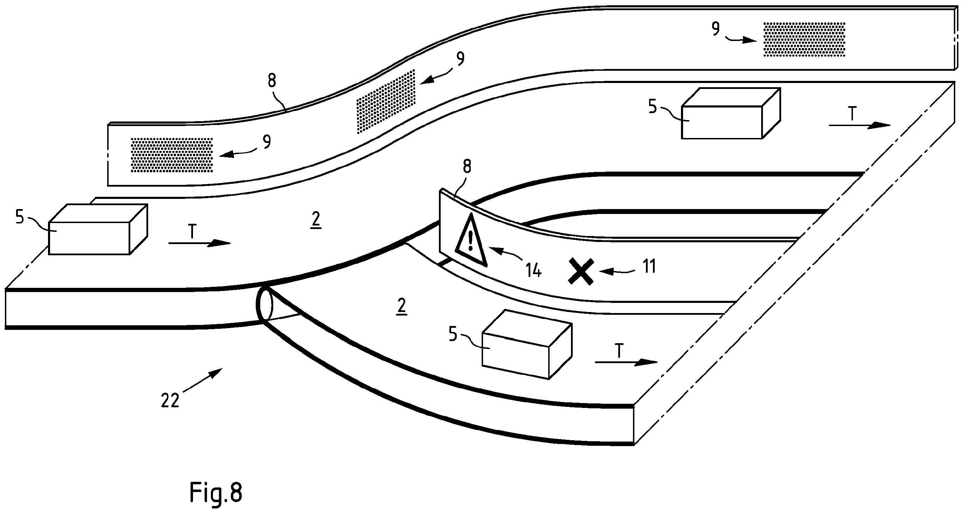

In der Fig. 8 ist eine Förderanlage 1 mit einer Gabelung 22 dargestellt. Das auf die Gabelung 22 zubewegte Stückgut 5 ist in Überdeckung mit dem optischen Signal 9 und bewegt sich synchron mit diesem. Es liegt also kein gestörter Betrieb vor. Für das Stückgut 5 ganz rechts gilt selbiges. Das mittlere Stückgut 5 ist dagegen aus irgendwelchen Gründen an der Gabelung 22 falsch abgebogen. Das zugeordnete optische Signal 9 wird an dem anderen Zweig der Gabelung 22 angezeigt, wo das Stückgut 5 hätte erwartet werden dürfen. Tatsächlich wird das Stückgut 5 jedoch entlang des anderen Zweigs der Gabelung 22 transportiert. Dem Stückgut 5 zugeordnet bewegt sich ein optisches Signal 11 in Form eines Kreuzes mit diesem entlang des weiteren Transportwegs bzw. Transportpfads 2, so dass ersichtlich ist, dass das Stückgut 5 nicht wie vorgesehen gefördert worden ist. Zudem kann die Steuereinrichtung 7 infolge der Beobachtung des Stückguts 5 darauf schließen, dass der Ort der Störung im Bereich der Gabelung 22 liegen muss, weshalb an der Gabelung 22 stationär ein weiteres optisches Signal 17 angezeigt wird, das den vermeintlichen Ort der Störung kennzeichnen soll.

## Patentansprüche

1. Verfahren zur Überwachung und/oder Instandhaltung einer vereinzelte Stückgüter (5), insbesondere Packstücke, transportierenden Förderanlage (1), wobei die Förderanlage (1) eine sich wenigstens abschnittsweise entlang eines Transportpfads (2) für die Stückgüter (5) erstreckenden Anzeigeeinrichtung (8) aufweist, wobei die Anzeigeeinrichtung (8) dazu ausgebildet ist, wenigstens ein optisches Signal (9-14,17,21) an unterschiedlichen Stellen des wenigstens einen Transportpfads (2) anzuzeigen und wobei die Anzeigeeinrichtung (8) mit einer Steuereinrichtung (7) gekoppelt ist,
- bei dem die Steuereinrichtung (7) Informationen betreffend das Verhältnis der tatsächlichen Förderung wenigstens eines Stückguts (5) entlang des wenigstens einen Transportpfads (2) zur vorbestimmten Förderung des wenigstens einen Stückguts (5) entlang des wenigstens einen Transportpfads (2) erhält und/oder ermittelt,
- bei dem von der Anzeigeeinrichtung (8) wenigstens abschnittsweise ein sich parallel zu einem sich entlang des wenigstens einen Transportpfads (2) transportierten Stückgut (5) mitlaufendes, optisches Signal (9-13,21) angezeigt wird und
- bei dem das mit dem wenigstens einen Stückgut (5) mitlaufende, optische Signal (9-13,21) das Verhältnis der tatsächlichen Förderung wenigstens eines Stückguts (5) entlang des wenigstens einen Transportpfads (2) zur vorbestimmten Förderung des wenigstens einen Stückguts (5) entlang des wenigstens einen Transportpfads (2) in Abhängigkeit des jeweils tatsächlichen und/oder vorbestimmten Ortes des wenigstens einen Stückguts (5) anzeigt.

2. Verfahren nach Anspruch 1,
- bei dem das wenigstens eine optische Signal (9-14,17,21) durch ein sich wenigstens abschnittsweise entlang des wenigstens einen Transportpfads (2) erstreckendes LED-Band der Anzeigeeinrichtung (8) erzeugt wird und/oder
- bei dem das wenigstens eine optische Signal (9-14,17,21) durch eine Projektionseinrichtung der auf eine sich wenigstens abschnittsweise entlang des wenigstens einen Transportpfads (2) erstreckende Projektionsbahn der Anzeigeeinrichtung (8) erzeugt wird und/oder
- bei dem das wenigstens eine optische Signal (9-14,17,21) durch ein sich wenigstens abschnittsweise entlang des wenigstens einen Transportpfads (2) erstreckendes Display, insbesondere LCD-Display, der Anzeigeeinrichtung (8) erzeugt wird.

3. Verfahren nach Anspruch 1 oder 2,
bei dem das wenigstens eine optische Signal (9-13) mit einer Längserstreckung entlang des Transportpfads (2) angezeigt wird, die wenigstens im Wesentlichen der Längserstreckung des wenigstens einen dem optischen Signal (9-13) zugeordneten Stückguts (5) entspricht.

4. Verfahren nach einem der Ansprüche 1 bis 3,
- bei dem das wenigstens eine optische Signal (9-13) wenigstens abschnittsweise derart entlang des Transportpfads (2) bewegt wird, wie es der vorbestimmten Förderung des wenigstens einen, dem wenigstens einen Signal (9-13) zugeordneten Stückguts (5) entlang des wenigstens einen Transportpfads (2) entspricht und, vorzugsweise,
- bei dem das wenigstens eine optische Signal (9-13) und das wenigstens eine dem wenigstens einen Signal (9-13) zugeordnete Stückgut (5) bei ungestörtem Transport des wenigstens einen Stückguts (5) einander entsprechend entlang des wenigstens einen Transportpfads (2) und entlang der Anzeigeeinrichtung (8) bewegt werden.

5. Verfahren nach einem der Ansprüche 1 bis 4,
- bei dem sich das optische Signal (9-13) beim Passieren eines Orts, an dem eine vorbestimmte Abweichung der tatsächlichen Förderung wenigstens eines Stückguts (5) entlang des wenigstens einen Transportpfads (2) im Vergleich mit der vorbestimmten Förderung des wenigstens einen Stückguts (5) entlang des wenigstens einen Transportpfads (2) auftritt, von einer einen störungsfreien Transport des wenigstens einen Stückguts (5) charakterisierenden Signalform zu einer einen gestörten Transport des wenigstens einen Stückguts (5) charakterisierenden Signalform verändert und, vorzugsweise,
- bei dem das mit dem wenigstens einen Stückgut (5) mitlaufende, optische Signal (9-13) wenigstens eine einen gestörten Transport des wenigstens einen Stückguts (5) charakterisierende Signalform beibehält, solange das Signal (9-13) mit dem Stückgut (5) entlang des wenigstens einen Transportpfads (2) mitläuft und einen gestörten Transport des wenigstens einen Stückguts (5) am jeweiligen Ort der Anzeige vorliegt.

6. Verfahren nach Anspruch 5,
bei dem die wenigstens eine einen störungsfreien Transport eines Stückguts (5) charakterisierende Signalform und/oder die einen gestörten Transport eines Stückguts (5) charakterisierende wenigstens eine Signalform eine vorbestimmte Farbe und/oder ein vorbestimmtes Zeichen aufweist.

7. Verfahren nach Anspruch 5 oder 6,
bei dem die wenigstens eine einen gestörten Transport eines Stückguts (5) charakterisierende Signalform an einem Ort der Störung als Ort am Übergang von dem ungestörten Transport zum gestörten Transport wenigstens eines Stückguts (5) dauerhaft oder periodisch angezeigt wird.

8. Verfahren nach einem der Ansprüche 5 bis 7,
bei dem die Anzeigeeinrichtung (8) wenigstens eine Signalform zum Anzeigen eines fehlerfreien Zustands, wenigstens eine Signalform zum Anzeigen wenigstens eines fehlerhaften Zustands, wenigstens eine Signalform zum Anzeigen wenigstens eines fehleranbahnenden Zustands und/oder wenigstens eine Signalform zum Anzeigen wenigstens eines arbeitsfähigen Zustands anzeigen kann.

9. Verfahren nach einem der Ansprüche 5 bis 8,
- bei dem das Verhältnis der tatsächlichen Förderung wenigstens eines Stückguts (5) entlang des wenigstens einen Transportpfads (2) zur vorbestimmten Förderung des wenigstens einen Stückguts (5) entlang des wenigstens einen Transportpfads (2) in Abhängigkeit des jeweiligen Ortes des wenigstens einen Stückguts (5) durch wenigstens einen Vergleich zwischen wenigstens einem vorgegebenen Normativwert und wenigstens einem Messwert betreffend den Transport wenigstens eines Stückguts (5) entlang des wenigstens einen Transportpfads (2) ermittelt wird und, vorzugsweise,
- bei dem als wenigstens ein Normativwert wenigstens ein Nominalwert, wenigstens ein Eingriffswert, wenigstens ein Normalwert und/oder wenigstens ein Grenzwert verwendet wird.

10. Verfahren nach einem der Ansprüche 1 bis 9,
bei dem das Verhältnis der tatsächlichen Förderung einer Reihe von nacheinander entlang des wenigstens einen Transportpfads (2) transportierter Stückgüter (5) zur vorbestimmten Förderung derselben Reihe von Stückgütern (5) entlang des wenigstens einen Transportpfads (2) in Abhängigkeit der jeweiligen Orte der entsprechenden Stückguter (5) für jedes Stückgut (5) ermittelt und mit den anderen, für die anderen Stückgüter (5) der Reihe von Stückgütern (5) ermittelten Verhältnissen verglichen wird.

11. Verfahren nach einem der Ansprüche 1 bis 10,
- bei dem anhand des Verhältnisses der tatsächlichen Förderung wenigstens eines Stückguts (5) entlang des wenigstens einen Transportpfads (2) zur vorbestimmten Förderung des wenigstens einen Stückguts (5) entlang des wenigstens einen Transportpfads (2) in Abhängigkeit des jeweiligen Ortes des wenigstens einen Stückguts (5) von der Steuereinrichtung (7) auf wenigstens eine Ursache geschlossen wird und, vorzugsweise,
- bei dem wenigstens ein Signal der Anzeigeeinrichtung (8) wenigstens abschnittsweise entlang des Transportpfads (2) des wenigstens einen Stückguts (5) in Richtung des der wenigstens einen Ursache zugeordneten Entstehungsorts wandert und/oder wenigstens ein Signal (14,17) der Anzeigeeinrichtung (8) an einem dem Entstehungsort zugeordneten Ort der Anzeigeeinrichtung (8) angezeigt wird.

12. Verfahren nach Anspruch 11,
- bei dem das wenigstens eine Signal (17), insbesondere wiederholt, von dem Ort der Störung als Ort am Übergang von dem ungestörten Transport zum gestörten Transport wenigstens eines Stückguts (5) bis zu dem der Störung zugeordneten Entstehungsort zugeordneten Ort der Anzeigeeinrichtung (8) wandert und/oder
- bei dem das wenigstens eine Signal (17), insbesondere wiederholt, von dem dem Stückgut tatsächlich zugeordneten Ort bis zu dem Ort der Störung als Ort am Übergang von dem ungestörten Transport zum gestörten Transport wenigstens eines Stückguts (5) wandert.

13. Förderanlage (1) zum Transportieren von Stückgütern (5), insbesondere Packstücken, wobei die Förderanlage (1) eine sich wenigstens abschnittsweise entlang eines Transportpfads (2) für die Stückgüter (5) erstreckende Anzeigeeinrichtung (8) aufweist, wobei die Anzeigeeinrichtung (8) dazu ausgebildet ist, wenigstens ein optisches Signal (9-14,17,21) an unterschiedlichen Stellen des wenigstens einen Transportpfads (2) anzuzeigen und wobei die Anzeigeeinrichtung (8) mit einer Steuereinrichtung (7) gekoppelt ist,
wobei die Anzeigeeinrichtung (8) zum wenigstens abschnittsweisen Anzeigen eines sich parallel zu einem sich entlang des wenigstens einen Transportpfads (2) transportierten Stückgut (5) mitlaufenden, optischen Signals (9-13) ausgebildet ist,
**dadurch gekennzeichnet, dass**
die Förderanlage für die Durchführung eines Verfahrens zur Überwachung und/oder Instandhaltung, insbesondere gemäß einem der Ansprüche 1 bis 12, ausgebildet ist, dass die Steuereinrichtung (7) zum Erhalten und/oder Ermitteln von Informationen betreffend das Verhältnis der tatsächlichen Förderung wenigstens eines Stückguts (5) entlang des wenigstens einen Transportpfads (2) zur vorbestimmten Förderung des wenigstens einen Stückguts (5) entlang des wenigstens einen Transportpfads (2) ausgebildet ist, und dass die Steuereinrichtung (7) zur Anzeige des Verhältnisses der tatsächlichen Förderung wenigstens eines Stückguts (5) entlang des wenigstens einen Transportpfads (2) zur vorbestimmten Förderung des wenigstens einen Stückguts (5) entlang des wenigstens einen Transportpfads (2) in Abhängigkeit des jeweils tatsächlichen und/oder vorbestimmten Ortes des wenigstens einen Stückguts (5) über das mit dem wenigstens einen Stückgut (5) mitlaufenden, optischen Signal (9-13) ausgebildet ist.

14. Förderanlage nach Anspruch 13,
**dadurch gekennzeichnet, dass**
die Anzeigeeinrichtung (8) ein sich wenigstens abschnittsweise entlang des wenigstens einen Transportpfads (2) erstreckendes LED-Band und/oder eine Projektionseinrichtung zum Projizieren des Signals auf eine sich wenigstens abschnittsweise entlang des wenigstens einen Transportpfads (2) erstreckende Projektionsbahn und/oder ein sich wenigstens abschnittsweise entlang des wenigstens einen Transportpfads (2) erstreckendes Display, insbesondere LCD-Display, umfasst.

## Claims

1. Method for monitoring and/or maintaining a conveyor system (1) transporting separated piece goods (5), in particular packages, wherein the conveyor system (1) has a display device (8) extending at least in sections along a transport path (2) for the piece goods (5), wherein the display device (8) is designed to display at least one optical signal (9-14, 17, 21) at different points of the at least one transport path (2) and wherein the display device (8) is coupled to a control device (7),
- in which the control device (7) receives and/or determines information relating to the relationship of the actual conveyance of at least one piece good (5) along the at least one transport path (2) with respect to the predetermined conveyance of the at least one piece good (5) along the at least one transport path (2),
- in which an optical signal (9-13, 21) running along parallel to a piece good (5) transported along the at least one transport path (2) is displayed at least in sections by the display device (8) and
- in which the optical signal (9-13, 21) running along with the at least one piece good (5) displays the relationship of the actual conveyance of at least one piece good (5) along the at least one transport path (2) with respect to the predetermined conveyance of the at least one piece good (5) along the at least one transport path (2) as a function of the respectively actual and/or predetermined location of the at least one piece good (5).

2. Method according to claim 1,
- in which the at least one optical signal (9-14, 17, 21) is generated by an LED strip of the display device (8) extending at least in sections along the at least one transport path (2) and/or
- in which the at least one optical signal (9-14, 17, 21) is generated by a projection device onto a projection path of the display device (8) extending at least in sections along the at least one transport path (2) and/or
- in which the at least one optical signal (9-14, 17, 21) is generated by a display, in particular an LCD display, of the display device (8) extending at least in sections along the at least one transport path (2).

3. Method according to claim 1 or 2,
in which the at least one optical signal (9-13) is displayed with a longitudinal extension along the transport path (2), which corresponds at least substantially to the longitudinal extension of the at least one piece good (5) assigned to the optical signal (9-13).

4. Method according to any one of claims 1 to 3,
- in which the at least one optical signal (9-13) is moved at least in sections along the transport path (2) in such manner that it corresponds to the predetermined conveyance of the at least one piece good (5), assigned to the at least one signal (9-13), along the at least one transport path (2) and, preferably,
- in which the at least one optical signal (9-13) and the at least one piece good (5) assigned to the at least one signal (9-13) are moved corresponding to one another along the at least one transport path (2) and along the display device (8) during undisrupted transport of the at least one piece good (5).

5. Method according to any one of claims 1 to 4,
- in which, when passing a location at which there occurs a predetermined deviation of the actual conveyance of at least one piece good (5) along the at least one transport path (2) in comparison to the predetermined conveyance of the at least one piece good (5) along the at least one transport path (2), the optical signal (9-13) changes from a signal form characterising a disruption-free transport of the at least one piece good (5) to a signal form characterising a disrupted transport of the at least one piece good (5) and, preferably,
- in which the optical signal (9-13) running along with the at least one piece good (5) retains at least one signal form characterising a disrupted transport of the at least one piece good (5) as long as the signal (9-13) runs along with the piece good (5) along the at least one transport path (2) and there is a disrupted transport of the at least one piece good (5) at the respective location of the display.

6. Method according to claim 5,
in which the at least one signal form characterising a disruption-free transport of a piece good (5) and/or the at least one signal form characterising a disrupted transport of a piece good (5) has a predetermined colour and/or a predetermined symbol.

7. Method according to claim 5 or 6,
in which the at least one signal form characterising a disrupted transport of a piece good (5) is permanently or periodically displayed at a location of the disruption as the location at the transition from the undisrupted transport to the disrupted transport of at least one piece good (5).

8. Method according to any one of claims 5 to 7,
in which the display device (8) can display at least one signal form for displaying a fault-free state, at least one signal form for displaying at least one faulty state, at least one signal form for displaying at least one fault-initiating state and/or at least one signal form for displaying at least one working state.

9. Method according to any one of claims 5 to 8,
- in which the relationship of the actual conveyance of at least one piece good (5) along the at least one transport path (2) with respect to the predetermined conveyance of the at least one piece good (5) along the at least one transport path (2) is determined as a function of the respective location of the at least one piece good (5) by at least one comparison between at least one predefined normative value and at least one measurement value relating to the transport of at least one piece good (5) along the at least one transport path (2) and, preferably,
- in which at least one nominal value, at least one intervention value, at least one normal value and/or at least one limit value is used as at least one normative value.

10. Method according to any one of claims 1 to 9,
in which the relationship of the actual conveyance of a series of piece goods (5) transported one after the other along the at least one transport path (2) with respect to the predetermined conveyance of the same series of piece goods (5) along the at least one transport path (2) is determined as a function of the respective locations of the corresponding piece goods (5) for each piece good (5) and compared with the other relationships determined for the other piece goods (5) of the series of piece goods (5).

11. Method according to any one of claims 1 to 10,
- in which at least one cause is inferred by the control device (7) on the basis of the relationship of the actual conveyance of at least one piece good (5) along the at least one transport path (2) with respect to the predetermined conveyance of the at least one piece good (5) along the at least one transport path (2) as a function of the respective location of the at least one piece good (5) and, preferably,
- in which at least one signal of the display device (8) migrates at least in sections along the transport path (2) of the at least one piece good (5) in the direction of the point of origin assigned to the at least one cause and/or at least one signal (14, 17) of the display device (8) is displayed at a location of the display device (8) assigned to the point of origin.

12. Method according to claim 11,
- in which the at least one signal (17), in particular repeatedly, migrates from the location of the disruption as the location at the transition from the undisrupted transport to the disrupted transport of at least one piece good (5) to the location of the display device (8) assigned to the point of origin assigned to the disruption and/or
- in which the at least one signal (17), in particular repeatedly, migrates from the location actually assigned to the piece good to the location of the disruption as the location at the transition from the undisrupted transport to the disrupted transport of at least one piece good (5).

13. Conveyor system (1) for transporting piece goods (5), in particular
- packages, wherein the conveyor system (1) has a display device (8) extending at least in sections along a transport path (2) for the piece goods (5), wherein the display device (8) is designed to display at least one optical signal (9-14, 17, 21) at different points of the at least one transport path (2) and wherein the display device (8) is coupled to a control device (7),
wherein the display device (8) is designed to display, at least in sections, an optical signal (9-13) running along parallel to a piece good (5) transported along the at least one transport path (2),
**characterised in that**
the conveyor system is designed to carry out a method for monitoring and/or maintenance, in particular according to any one of claims 1 to 12, **in that** the control device (7) is designed to receive and/or determine information relating to the relationship of the actual conveyance of at least one piece good (5) along the at least one transport path (2) with respect to the predetermined conveyance of the at least one piece good (5) along the at least one transport path (2),
and **in that** the
control device (7) is designed to display the relationship of the actual conveyance of at least one piece good (5) along the at least one transport path (2) with respect to the predetermined conveyance of the at least one piece good (5) along the at least one transport path (2) as a function of the respectively actual and/or predetermined location of the at least one piece good (5) via the optical signal (9-13) running along with the at least one piece good (5).

14. Conveyor system according to claim 13,
**characterised in that**
the display device (8) comprises an LED strip extending at least in sections along the at least one transport path (2) and/or a projection device for projecting the signal onto a projection path extending at least in sections along the at least one transport path (2) and/or a display, in particular an LCD display, extending at least in sections along the at least one transport path (2).

## Revendications

1. Procédé de surveillance et/ou d'entretien d'un convoyeur (1) transportant une marchandise de détail isolée (5), notamment des colis, le convoyeur (1) présentant un dispositif d'affichage (8) s'étendant, au moins partiellement, le long d'un trajet de transport (2) pour les marchandises de détail (5), le dispositif d'affichage (8) étant conçu pour afficher au moins un signal optique (9-14, 17, 21) à différents endroits dudit au moins un trajet de transport (2) et le dispositif d'affichage (8) étant couplé à un dispositif de commande (7),
- dans lequel le dispositif de commande (7) reçoit et/ou détermine des informations concernant le rapport entre le transport effectif d'au moins une marchandise de détail (5) le long dudit au moins un trajet de transport (2) et le transport prédéterminé de ladite au moins une marchandise de détail (5) le long dudit au moins un trajet de transport (2),
- dans lequel le dispositif d'affichage (8) affiche, au moins partiellement, un signal optique (9-13, 21) se déplaçant parallèlement à une marchandise de détail (5) transportée le long dudit au moins un trajet de transport (2) et
- dans lequel le signal optique (9-13, 21) se déplaçant avec ladite au moins une marchandise de détail (5) affiche le rapport entre le transport effectif de ladite au moins une marchandise de détail (5) le long dudit au moins un trajet de transport (2) et le transport prédéterminé de ladite au moins une marchandise de détail (5) le long dudit au moins un trajet de transport (2) en fonction de l'emplacement effectif et/ou prédéterminé de ladite au moins une marchandise de détail (5).

2. Procédé selon la revendication 1,
- dans lequel ledit au moins un signal optique (9-14, 17, 21) est produit par une bande LED du dispositif d'affichage (8) s'étendant, au moins partiellement, le long dudit au moins un trajet de transport (2) et/ou
- dans lequel ledit au moins un signal optique (9-14, 17, 21) est produit par un moyen de projection sur une trajectoire de projection du dispositif d'affichage (8) s'étendant, au moins partiellement, le long dudit au moins un trajet de transport (2) et/ou
- dans lequel ledit au moins un signal optique (9-14, 17, 21) est produit par un écran, notamment un écran LCD, du dispositif d'affichage (8), s'étendant, au moins partiellement, le long dudit au moins un trajet de transport (2).

3. Procédé selon la revendication 1 ou 2,
dans lequel ledit au moins un signal optique (9-13) est affiché avec une extension longitudinale le long du trajet de transport (2) qui correspond, au moins essentiellement, à l'extension longitudinale de ladite au moins une marchandise de détail (5) associée au signal optique (9-13).

4. Procédé selon l'une des revendications 1 à 3,
- dans lequel ledit au moins un signal optique (9-13) est déplacé, au moins partiellement, le long du trajet de transport (2), de sorte à correspondre au transport prédéterminé de ladite au moins une marchandise de détail (5) associée audit au moins un signal (9-13) le long dudit au moins un trajet de transport (2) et, de préférence,
- dans lequel ledit au moins un signal optique (9-13) et ladite au moins une marchandise de détail (5) associée audit au moins un signal (9-13) sont déplacées l'un par rapport à l'autre le long dudit au moins un trajet de transport (2) et le long du dispositif d'affichage (8) lors d'un transport sans accrocs de la dite au moins une marchandise de détail (5).

5. Procédé selon l'une des revendications 1 à 4,
- dans lequel le signal optique (9-13) se modifie d'une forme de signal caractérisant un transport sans accrocs de ladite au moins une marchandise de détail (5) à une forme de signal caractérisant un transport avec accrocs de ladite au moins une marchandise de détail (5) lors du passage à un emplacement où se produit un écart prédéterminé du transport effectif de ladite au moins une marchandise de détail (5) le long dudit au moins un trajet de transport (2) par rapport au transport prédéterminé de ladite au moins une marchandise de détail (5) le long dudit au moins un trajet de transport (2), et, de préférence,
- dans lequel le signal optique (9-13) se déplaçant avec ladite au moins une marchandise de détail (5) conserve au moins une forme de signal caractérisant un transport avec accrocs de ladite au moins une marchandise de détail (5), tant que le signal (9-13) se déplace avec la marchandise de détail (5) le long dudit au moins un trajet de transport (2) et qu'il existe un transport avec accrocs de ladite au moins une marchandise de détail (5) à l'emplacement respectif de l'affichage.

6. Procédé selon la revendication 5,
dans lequel ladite au moins une forme de signal caractérisant un transport sans accrocs d'une marchandise de détail (5) et/ou au moins une forme de signal caractérisant un transport avec accrocs d'une marchandise de détail (5) présente au moins une couleur prédéterminée et/ou un signe prédéterminé.

7. Procédé selon la revendication 5 ou 6,
dans lequel ladite au moins une forme de signal caractérisant un transport avec accrocs d'une marchandise de détail (5) est affichée, en permanence ou périodiquement, à un emplacement où le défaut s'est produit en tant qu'emplacement de transition entre le transport sans accrocs et le transport avec accrocs de ladite au moins une marchandise de détail (5).

8. Procédé selon l'une des revendications 5 à 7,
dans lequel le dispositif d'affichage (8) peut afficher au moins une forme de signal pour afficher un état sans défaut, au moins une forme de signal pour afficher au moins un état défectueux, au moins une forme de signal pour afficher au moins un état propice aux défauts et/ou au moins une forme de signal pour afficher au moins un état apte à fonctionner.

9. Procédé selon l'une des revendications 5 à 8,
- dans lequel le rapport entre le transport effectif de ladite au moins une marchandise de détail (5) le long dudit au moins un trajet de transport (2) et le transport prédéterminé de ladite au moins une marchandise de détail (5) le long dudit au moins un trajet de transport (2) est déterminé, en fonction de l'emplacement respectif de ladite au moins une marchandise de détail (5), par une comparaison entre au moins une valeur normative prédéfinie et au moins une valeur mesurée concernant le transport d'au moins une marchandise de détail (5) le long dudit au moins un trajet de transport (2) et, de préférence,
- dans lequel l'on utilise au moins une valeur nominale, au moins une valeur d'intervention, au moins une valeur normale et/ou au moins une valeur limite au moins en tant que valeur normative.

10. Procédé selon l'une des revendications 1 à 9,
dans lequel le rapport entre le transport effectif d'une suite de marchandises de détail (5) transportées successivement le long dudit au moins un trajet de transport (2) et le transport prédéterminé de la même suite de marchandises de détail (5) le long dudit au moins un trajet de transport (2) est déterminé, pour chaque marchandise de détail (5), en fonction des emplacements respectifs des marchandises de détail (5) correspondantes, et est comparé aux autres rapports déterminés pour les autres marchandises de détail (5) de la suite de marchandises de détail (5).

11. Procédé selon l'une des revendications 1 à 10,
- dans lequel, sur la base du rapport entre le transport effectif de ladite au moins une marchandise de détail (5) le long dudit au moins un trajet de transport (2) et le transport prédéterminé de ladite au moins une marchandise de détail (5) le long dudit au moins un trajet de transport (2), le dispositif de commande (7) conclut, en fonction de l'emplacement respectif de ladite au moins une marchandise de détail (5), à au moins une cause et, de préférence,
- dans lequel ledit au moins un signal du dispositif d'affichage (8) se déplace, au moins partiellement, le long du trajet de transport (2) de ladite au moins une marchandise de détail (5), en direction de l'emplacement d'origine associé à au moins une cause et/ou ledit au moins un signal (14, 17) du dispositif d'affichage (8) est affiché à un emplacement du dispositif d'affichage (8) associé à l'emplacement d'origine.

12. Procédé selon la revendication 11,
- dans lequel ledit au moins un signal (17) se déplace, notamment de manière répétée, de l'emplacement où le défaut a eu lieu en tant qu'emplacement de transition entre le transport sans accrocs et le transport avec accrocs de ladite au moins une marchandise de détail (5) jusqu'à l'emplacement du dispositif d'affichage (8) associé à l'emplacement d'origine associé au défaut et/ou
- dans lequel ledit au moins un signal (17) se déplace, notamment de manière répétée, de l'emplacement effectivement associé à la marchandise de détail jusqu'à l'emplacement où le défaut a eu lieu en tant qu'emplacement de transition entre le transport sans accrocs et le transport avec accrocs de ladite au moins une marchandise de détail (5).

13. Convoyeur (1) pour le transport de marchandises de détail (5), notamment des colis, dans lesquels le convoyeur (1) présente un dispositif d'affichage (8) s'étendant, au moins partiellement, le long d'un trajet de transport (2) pour les marchandises de détail (5), le dispositif d'affichage (8) étant conçu pour afficher au moins un signal optique (9-14, 17, 21) à différents endroits dudit au moins un trajet de transport (2) et le dispositif d'affichage (8) étant couplé à un dispositif de commande (7),
le dispositif d'affichage (8) étant conçu pour l'affichage, au moins partiellement, d'un signal optique (9-13) se déplaçant parallèlement à une marchandise de détail (5) transportée le long dudit au moins un trajet de transport (2),
**caractérisé en ce que**
le convoyeur est conçu pour l'exécution d'un procédé de surveillance et/ou d'entretien, notamment selon l'une des revendications 1 à 12, **en ce que** le dispositif de commande (7) est conçu pour la réception et/ou la détermination d'informations concernant le rapport entre le transport effectif de ladite au moins une marchandise de détail (5) le long dudit au moins un trajet de transport (2) et le transport prédéterminé de ladite au moins une marchandise de détail (5) le long dudit au moins un trajet de transport (2), et **en ce que** le dispositif de commande (7) est conçu pour l'affichage du rapport entre le transport effectif de ladite au moins une marchandise de détail (5) le long dudit au moins un trajet de transport (2) et le transport prédéterminé de ladite au moins une marchandise de détail (5) le long dudit au moins un trajet de transport (2), en fonction de l'emplacement effectif et/ou prédéterminé respectif de ladite au moins une marchandise de détail (5) par le biais du signal optique (9-13) qui se déplace avec ladite au moins une marchandise de détail (5).

14. Convoyeur selon la revendication 13,
**caractérisé en ce que**
le dispositif d'affichage (8) comprend une bande LED s'étendant au moins partiellement le long dudit au moins un trajet de transport (2) et/ou un moyen de projection pour projeter le signal sur une trajectoire de projection s'étendant, au moins partiellement, le long dudit au moins un trajet de transport (2) et/ou un écran, notamment un écran LCD, s'étendant, au moins partiellement, le long dudit au moins un trajet de transport (2).
